# EUROPÄISCHE PATENTANMELDUNG

(11) **EP 4 649 819 A1**
(43) Veröffentlichungstag der Anmeldung: **19.11.2025**
(21) Anmeldenummer: 25175865.2
(22) Anmeldetag: 12.05.2025
(51) Int. Cl.: A01G 9/02, A01G 27/02

(54) **PFLANZENBEHÄLTER**

(30) Priorität: 13.05.2024 DE 102024113280
(71) Anmelder: Bibas, Uwe, 01723 Kesselsdorf (DE); Steinborn, René, 01097 Dresden (DE)
(72) Erfinder: Bibas, Uwe, 01723 Kesselsdorf (DE)
(74) Vertreter: Riechelmann & Carlsohn Patentanwälte PartG mbB

(57) **Zusammenfassung**

Die Erfindung betrifft einen Pflanzenbehälter (1), aufweisend eine an ihrer Oberseite offene Innenkammer (11) zur Aufnahme von Wasser (81), eine Außenkammer (21) zur Aufnahme zumindest einer Pflanze (82), eine umlaufende Innenwand (2), die die Innenkammer (11) von der Außenkammer (21) trennt, und eine umlaufende Außenwand (3), die die Außenkammer (21) begrenzt, wobei der Pflanzenbehälter (1) einen Fuß (4) aufweist, in dem eine Bodenkammer (31) zur Aufnahme eines Substrates (83) ausgebildet ist, wobei die Bodenkammer (31) mit der Innenkammer (11) und der Außenkammer (21) in Verbindung steht.

## Beschreibung

Die Erfindung betrifft einen Pflanzenbehälter, der eine Außenkammer zur Aufnahme einer Pflanze und eine Innenkammer zur Aufnahme von Wasser aufweist. Sie betrifft ferner ein Verfahren zur Haltung von Pflanzen unter Verwendung des Pflanzenbehälters.

Die Begrünung von Straßen und Plätzen soll die Aufenthaltsqualität und das Mikroklima verbessern. Die Anpflanzung von Sträuchern und Bäumen ist jedoch mit einer Vielzahl von Herausforderungen verbunden. Eine direkte Anpflanzung von Bäumen kann durch deren Wurzelbildung zur Zerstörung des Straßenbelages und von Infrastruktur für Medien, z. B. Wasser, Strom, Fernwärme, Gas, Telekommunikation, etc., führen. Außerdem ist die ausreichende Versorgung der Bäume mit Wasser schwierig, weil die nicht versiegelte Straßen- oder Platzfläche gering ist. Betonkübel, die mit Erde befüllt sind und in die der Strauch oder der Baum eingesetzt ist, bedürfen einer intensiven Pflege und einer aufwendigen Versorgung der Pflanzen mit Wasser. Der Ringraum zwischen dem Innengefäß und dem Außengefäß ist allerdings verschlossen. Der Vorrat an Wasser ist gering, weshalb ein - im Vergleich zur Ringkammer - großes, mit Erde befülltes Innengefäß notwendig ist.

Im Hinblick auch auf diese Probleme schlägt DE G 87 12 833 U1 einen Großpflanzenbehälter vor, der ein Außengefäß und ein darin angeordnetes Innengefäß aufweist. Das Innengefäß soll mit Substrat befüllt werden und die Wurzeln eines Strauches oder eines Baumes aufnehmen. Zwischen dem Boden des Innengefäßes und dem Boden des Außengefäßes ist ein Zwischenraum ausgebildet, der über Öffnungen im Boden des Innengefäßes zugänglich ist und Luft oder Wasser aufnehmen soll. Allerdings ist es erforderlich, dem Strauch oder Baum bedarfsgerecht Wasser zuzuführen, das aus der Umgebung in das Innengefäß, in dem sich der Strauch oder der Baum befindet, eingebracht werden muss. Regnet es nicht ausreichend, so ist eine Versorgung mit Wasser durch Gießen in entsprechend kurzen Abständen erforderlich.

Aufgabe der Erfindung ist es, die Nachteile nach dem Stand der Technik zu beseitigen. Es soll ein Pflanzenbehälter angegeben werden, der über einen vergleichsweise langen Zeitraum ohne Zuführung von Wasser von außen auskommt.

Diese Aufgabe wird durch die Merkmale der Ansprüche 1 und 15 gelöst. Zweckmäßige Ausgestaltungen der Erfindungen ergeben sich aus den Merkmalen der Unteransprüche.

Nach Maßgabe der Erfindung ist ein Pflanzenbehälter vorgesehen, der eine an ihrer Oberseite offene Innenkammer zur Aufnahme von Wasser, eine Außenkammer zur Aufnahme zumindest einer Pflanze, eine umlaufende Innenwand, die die Innenkammer von der Außenkammer trennt, und eine umlaufende Außenwand, die die Außenkammer begrenzt, aufweist. Der Pflanzenbehälter weist einen Fuß auf, in dem eine Bodenkammer zur Aufnahme eines Substrates ausgebildet ist. Die Bodenkammer steht mit der Außenkammer und mit der Innenkammer in Verbindung. Über die Bodenkammer können die Außenkammer und die Innenkammer miteinander in Verbindung stehen.

Der erfindungsgemäße Pflanzenbehälter kann einen - im Vergleich zu bekannten Pflanzenbehältern - großen Wasservorrat aufnehmen, beispielsweise mehr als einen Kubikmeter Wasser. Die Außenkammer erstreckt sich zu diesem Zweck vorzugsweise um die Innenkammer. Zu diesem Zweck ist die Innenwand vorgesehen, die die Innenkammer von der Außenkammer trennt. Die Innenkammer weist vorzugsweise einen kreisförmigen Querschnitt auf. Die Außenkammer weist vorzugsweise einen ringförmigen Querschnitt auf. Die Innenwand weist vorzugsweise einen ringförmigen Querschnitt auf. Die Außenwand weist vorzugsweise einen ringförmigen Querschnitt auf. Der Mittelpunkt des ringförmigen Querschnitts der Außenkammer liegt vorzugsweise auf dem kreisförmigen Mittelpunkt des Querschnitts der Innenkammer.

Es kann vorgesehen sein, dass die Innenkammer Wasser enthält. Die Innenkammer weist bevorzugt ein Innenvolumen von 0,5 bis 5 Kubikmeter, stärker bevorzugt von 0,6 bis 2 Kubikmeter, noch stärker bevorzugt von 0,7 bis 1,5 Kubikmeter und besonders bevorzugt von 0,8 bis 1,1 Kubikmeter auf. In einer Ausführungsform weist die Innenkammer ein Innenvolumen von 0,9 Kubikmeter auf. In diesem Fall kann sie 0,9 Kubikmeter Wasser aufnehmen. Die Innenkammer bildet den Wassertank des erfindungsgemäßen Pflanzenbehälters. Wasser kann in die Innenkammer beispielsweise über deren Oberseite zugeführt werden. In einer Ausführungsform des erfindungsgemäßen Pflanzenbehälters ist ein Einfüllstutzen vorgesehen, der die Zuführung von Wasser in die Innenkammer ermöglicht. Der erfindungsgemäße Pflanzenbehälter kann eine Einrichtung zur Anzeige des Wasserstandes in der Innenkammer aufweisen.

Die Außenkammer weist bevorzugt ein Innenvolumen von 0,9 bis 1,5 Kubikmeter auf. Die Außenkammer nimmt eine oder mehrere Pflanzen auf. Sie bildet das Pflanzgefäß des erfindungsgemäßen Pflanzenbehälters.

Die Bodenkammer weist bevorzugt ein Innenvolumen von 0,9 bis 5,0 Kubikmeter auf. Die Bodenkammer nimmt ein Substrat auf. Sie bildet den Drainagetank des erfindungsgemäßen Pflanzenbehälters.

Der erfindungsgemäße Pflanzenbehälter ermöglicht insbesondere eine Begrünung innerstädtischer Verkehrsflächen, beispielsweise von Straßen und Plätzen. Er kann aber auch in Innenräumen eingesetzt werden. Er ist im Außenbereich von Gebäuden einsetzbar. Er kann auf großen Plätzen, aber auch in engen Gassen eingesetzt werden. Er kann auch auf unbefestigten Böden aufgestellt werden. Der erfindungsgemäße Pflanzenbehälter kann auf Böden mit einer Bodenfestigkeit größer als 1 t/m² aufgestellt werden. Er kann auch auf geneigtem Untergrund aufgestellt werden. Das Gefälle ist vorzugsweise keiner als 8°.

Die mittels des erfindungsgemäßen Pflanzenbehälters erreichte Begrünung ermöglicht eine Beschattung, insbesondere eine Flächenbeschattung. Es ist von besonderem Vorteil, dass die Innenkammer ein großes Innenvolumen besitzt. Der erfindungsgemäße Pflanzenbehälter kann zur Begrünung innerstädtischer Verkehrsflächen über einen vergleichsweise langen Zeitraum genutzt werden. Das ist darauf zurückzuführen, dass sich die Pflanzen, die in die Außenkammer eingesetzt sind, über einen längeren Zeitraum autonom mit Wasser selbst versorgen können. Enthält die Innenkammer beispielsweise 0,9 Kubikmeter Wasser, so kann eine Selbstversorgung über einen Zeitraum von ca. acht Wochen erfolgen. Die Innenkammer ist nach oben hin offen. Daher kann Regenwasser in die Innenkammer eintreten. Für den Schutz gegen Laub kann die Innenkammer mit einem Abdeckgitter versehen sein. Dieses ist vorzugsweise aus Edelstahl, Stahl oder Kunststoff Der erfindungsgemäße Pflanzenbehälter kann somit während seiner gesamten Standzeit Regenwasser auffangen. In einem Beispiel kann der Pflanzenbehälter mehr als einen Kubikmeter Wasser aufnehmen.

Um ein Gedeihen der Pflanzen, die in die Außenkammer eingesetzt sind, zu gewährleisten, ist es vorteilhaft, die Pflanzenwurzeln dieser Pflanzen streng von Wasserreservoir zu trennen. Die Pflanzenwurzeln sollten daher nicht in die Innenkammer eintreten können. Aus diesem Grund weist der erfindungsgemäße Pflanzenbehälter eine Bodenkammer zur Aufnahme eines Substrates auf. Die Außenkammer kann einen Boden aufweisen, in dem eine oder mehrere Öffnungen ausgebildet sind. Über diese Öffnung(en) steht die Bodenkammer in Verbindung mit der Außenkammer. Durch diese Öffnung(en) im Boden der Außenkammer können Pflanzenwurzeln in die Bodenkammer eintreten. Bei dem Boden der Außenkammer kann es sich beispielsweise um ein Trenngitter handeln. Das Trenngitter trennt die Außenkammer von der Bodenkammer. Es kann vorgesehen sein, dass die Außenkammer keine Öffnung zur Innenkammer aufweist. Außenkammer und Innenkammer sind durch die umlaufende Innenwand voneinander getrennt.

Die Bodenkammer ist zur Aufnahme eines Substrates bestimmt. Die Bodenkammer kann somit ein Substrat enthalten. Bei dem Substrat kann es sich beispielsweise um ein Granulat, z. B. Tonkugeln, und/oder Erde handeln. Es kann vorgesehen sein, dass die Bodenkammer eine Schicht aus einem Granulat und eine Schicht aus Erde enthält. Die Schicht aus Granulat und die Schicht aus Erde können durch eine Folie getrennt sein. Die Folie kann eine Folientrennschicht sein. Die Folie kann als Wurzeltrennschicht dienen. Mit einer solchen Folie kann sichergestellt werden, dass Wurzeln von in der Außenkammer befindlichen Pflanzen nicht in die Schicht aus Granulat eindringen. Es ist jedoch möglich, dass die Wurzeln durch Öffnungen im Boden der Außenkammer, beispielsweise das Trenngitter, in die Schicht aus Erde eindringen, die sich in der Bodenkammer befindet. Aus diesem Grund kann vorgesehen sein, dass die Schicht aus Erde dem Boden der Außenkammer zugewandt ist, während die Schicht aus Granulat dem Boden der Außenkammer abgewandt ist.

Das Granulat dient zum Speichern von Nährstoffen und Wasser. Diese Nährstoffe können über die Wurzeln der Pflanzen von diesen aufgenommen werden. Damit dient das Granulat auch zum Düngen der Pflanzen.

Das Trenngitter kann zur Stabilisierung der Pflanze(n) dienen, die in die Außenkammer eingesetzt sind. Das ist insbesondere dann vorteilhaft, wenn die Pflanze(n) in Pflanzsäcken in die Außenkammer eingesetzt sind.

Es kann vorgesehen sein, dass der Fuß des erfindungsgemäßen Pflanzenbehälters einen Boden aufweist. Der Boden kann über eine umlaufende Seitenwand mit der Außenwand verbunden sein. Die Bodenkammer wird somit von dem Boden des Pflanzenbehälters, der umlaufenden Seitenwand, dem Boden der Außenkammer und dem Boden der Innenkammer begrenzt. Die Ausdehnung der Bodenkammer in radialer Richtung von der Längsachse des erfindungsgemäßen Pflanzenbehälters ist vorzugsweise größer als die Ausdehnung der Außenkammer in dieser Richtung. Die Längsachse des erfindungsgemäßen Pflanzenbehälters kann die Längsachse der Innenkammer sein. Der Fuß des Pflanzenbehälters kann in radialer Richtung über die Außenwand überstehen. Dazu kann die umlaufende Seitenwand des Fußes einen ersten umlaufenden Abschnitt aufweisen, der an die Außenwand angrenzt und dort in im Wesentlichen radialer Richtung nach außen, d. h. von der Längsachse weg, übersteht. An diesen ersten umlaufenden Abschnitt kann ein zweiter umlaufender Abschnitt angrenzen, der sich im Wesentlichen parallel zur Längsachse des erfindungsgemäßen Pflanzenbehälters erstreckt.

Es kann vorgesehen sein, dass der Boden eine Ausnehmung für ein Transportgerät aufweist. Bei der Ausnehmung kann es sich beispielsweise um eine Ausnehmung für einen Hubwagen handeln. Die Ausnehmung kann sich vom Rand des Bodens in radialer Richtung erstrecken, vorzugsweise über die gesamte Ausdehnung des Bodens orthogonal zur Längsachse des erfindungsgemäßen Pflanzenbehälters. Die Ausnehmung für ein Transportgerät ermöglicht eine leichte Beweglichkeit des erfindungsgemäßen Pflanzenbehälters. Der erfindungsgemäße Pflanzenbehälter ist somit mobil. Er kann autonom eingesetzt werden, weil keine zusätzlichen Hilfsmittel, abgesehen vom Transportgerät, erforderlich sind, um den erfindungsgemäßen Pflanzenbehälter zu bewegen. Beispielsweise kann der erfindungsgemäße Pflanzenbehälter so ausgelegt sein, dass er mit einem herkömmlichen Hubwagen, der für den Transport eines Gegenstandes mit einem Gewicht von bis zu 2,5 t geeignet ist, transportiert werden kann.

Um den Transport des erfindungsgemäßen Pflanzenbehälters zu erleichtern, kann der erfindungsgemäße Pflanzenbehälter ein oder mehrere Transportelemente aufweisen. Ein Beispiel eines solchen Transportelementes ist ein sogenannter Kugelkopf für Betonhaken. Die Kugelköpfe für Betonhaken können an dem Fuß so befestigt werden, dass der Behälter im Ganzen kranbar ist. Das Kranen kann über eine Kreuztraverse erfolgen. Dabei kann der Lastmittelpunkt bereits bei der Herstellung des Bodenbehälters ausgemittelt werden. Damit ist ein Kippen und/oder Schrägheben ausgeschlossen.

Es kann vorgesehen sein, dass am Boden des erfindungsgemäßen Pflanzenbehälters ein oder mehrere verstellbare Füße ausgebildet sind. Ein verstellbarer Fuß kann eine Höhenverstellung ermöglichen. Damit ist eine Ausrichtung des erfindungsgemäßen Pflanzenbehälters möglich. Auf diese Weise kann erreicht werden, dass sich die Längsachse des erfindungsgemäßen Pflanzenbehälters in der Senkrechten befindet. Der oder die Füße sorgen für eine gute Standsicherheit. Der erfindungsgemäße Pflanzenbehälter ist somit standsicher. Er ist außerdem rutschsicher.

Die Innenkammer kann einen Boden aufweisen. Der Boden der Innenkammer kann an die Innenwand angrenzen. Die Innenkammer kann somit von der Innenwand und ihrem Boden begrenzt sein. Der Boden bildet dabei eine Stirnseite der Innenkammer. An der gegenüberliegenden Stirnseite ist die Innenkammer offen. Vorzugsweise ist der Boden der Innenkammer vom Boden des Pflanzenbehälters beabstandet. Am Boden der Innenkammer können Stelzen ausgebildet sein, die sich bis zum Boden des Pflanzenbehälters erstrecken. Die Stelzen stützen den Boden der Innenkammer am Boden des erfindungsgemäße Pflanzenbehälters ab. Die Stelzen können sich durch die Bodenkammer erstrecken. Die Stelzen sind voneinander beabstandet, so dass die Bodenkammer nicht verschlossen wird. Die Stelzen können mit dem Boden des Pflanzenbehälters und/oder dem Boden der Innenwand fest verbunden sein.

Im Boden der Innenkammer kann eine Öffnung ausgebildet sein. Über diese Öffnung steht die Bodenkammer in Verbindung mit der Innenkammer. Wasser, das sich in der Innenkammer befindet, kann durch die Öffnung in die Bodenkammer eintreten. Es kann ein Ventil vorgesehen sein, das den Wasserstand in der Innenkammer reguliert. Dabei kann es sich beispielsweise um einen kugelförmigen Körper handeln, der in der Bodenkammer angeordnet ist und die Öffnung im Boden der Innerkammer in Abhängigkeit vom Wasserstand in der Bodenkammer verschließen kann, wenn der Wasserstand in der Bodenkammer eine bestimmte Höhe übersteigt. Der kugelförmige Körper, der auf der Oberfläche des in der Bodenkammer befindlichen Wassers schwimmt, wird angehoben, wenn der Wasserstand in der Bodenkammer steigt, und abgesenkt, wenn der Wasserstand in der Bodenkammer sinkt. Dabei kann er solange angehoben werden, bis er die Öffnung im Boden der Innenkammer verschließt. Zur Führung des kugelförmigen Körpers in vertikaler Richtung können vertikal verlaufende Führungselemente vorgesehen sein. Die Führungselemente können einen Kanal begrenzen, in dem der kugelförmige Körper steigen und sinken kann. Die Führungselemente sind voneinander beanstandet, so dass Wasser in den Kanal eintreten oder aus diesem austreten kann. Die Führungselemente können sich vom Boden der Innenkammer zum Boden des Pflanzenbehälters erstrecken. Die vertikale Achse des Kanals liegt vorzugsweise auf der Längsachse des erfindungsgemäßen Pflanzenbehälters. Im Kanal befindet sich vorzugsweise kein Substrat.

Vorzugsweise weisen die Innenkammer und die Außenkammer eine gemeinsame Längsachse auf. Sie können koaxial, bezogen auf die Längsachse des erfindungsgemäßen Pflanzenbehälters, angeordnet sein. Die Innenkammer kann eine zylinderförmige oder kegelstumpfförmige Grundform aufweisen. Die Längsachse der zylinderförmigen oder kegelstumpfförmigen Grundform liegt auf der Längsachse des erfindungsgemäßen Pflanzenbehälters. Dabei kann die Innenwand den Mantel des Zylinders oder des Kegelstumpfes bilden und der Boden der Innenkammer eine ihrer Stirnseiten. An der anderen Stirnseite ist die Innenkammer offen. Weist die Innenkammer eine kegelstumpfförmige Grundform auf, so nimmt der Durchmesser der Innenkammer vorzugsweise vom Boden der Innenkammer zu deren offener Stirnseite hin zu. Die Außenkammer kann eine hohlzylinderförmige Grundform aufweisen. Die Längsachse der hohlzylinderförmigen Grundform liegt auf der Längsachse des erfindungsgemäßen Pflanzenbehälters. Dabei kann die Innenwand die innere Mantelfläche des Hohlzylinders bilden, die Außenwand die äußere Mantelfläche des Hohlzylinders bilden und der Boden der Außenkammer eine ihrer Stirnseiten. An der anderen Stirnseite ist die Außenkammer offen.

Es kann vorgesehen sein, dass der erfindungsgemäße Pflanzenbehälter im Wesentlichen rotationssymmetrisch ausgebildet ist. Die Außenkammer und die Innenkammer sind vorzugsweise oberhalb der Bodenkammer angeordnet. Die Ausdehnung der Bodenkammer in radialer Richtung ist vorzugsweise größer als die gemeinsame Ausdehnung der Innenkammer und der Außenkammer in dieser Richtung. Die Bodenkammer kann deshalb über die Außenwand des erfindungsgemäßen Pflanzenbehälters überstehen und dessen Fuß bilden.

Der erfindungsgemäße Pflanzenbehälter kann eine Einrichtung zum Auffangen von Wasser, insbesondere von Regenwasser, aufweisen. Die Einrichtung zum Auffangen von Wasser wird im Folgenden auch als Wasserauffangeinrichtung bezeichnet. Die Wasserauffangeinrichtung kann von Haltestreben gehalten werden. Die Haltestreben können Rankstreben bilden, die die Ausbreitung der Pflanzen unterstützen. Die Haltestreben können mit Edelstahlnetzen miteinander verbunden sein. Die Rankstreben können Teil eines Rankgitters sein. Die Haltestreben können aus Federstahl gebildet sein. Das Rankgitter kann aus Federstahl gebildet sein. Die Haltestreben und/oder das Rankgitter können eine Tragegestell für die Blätter, Äste und/oder Triebe der Pflanze bilden.

Bei der Wasserauffangeinrichtung kann es sich beispielsweise um eine trichterförmige Wasserauffangeinrichtung handeln. Die trichterförmige Wasserauffangeinrichtung kann oberhalb der Innenkammer und der Außenkammer und beabstandet von diesen angeordnet sein. Dazu können Haltestreben vorgesehen sein, die die Wasserauffangeinrichtung tragen. Die trichterförmige Wasserauffangeinrichtung verjüngt sich vorzugsweise in Richtung der Innenkammer zu einer Öffnung hin, die der offenen Stirnseite der Innenkammer gegenüberliegt. Mit ihrer Oberkante steht die trichterförmige Wasserauffangeinrichtung in radialer Richtung vorzugsweise über die Außenwand über. Die trichterförmige Wasserauffangeinrichtung weist vorzugsweise eine Längsachse auf, die auf der Längsachse des erfindungsgemäßen Pflanzenbehälters liegt. In der Wandung der trichterförmigen Wasserauffangeinrichtung können zusätzliche Wasserdurchtrittsöffnungen ausgebildet sein, die einen Durchtritt von Wasser aus der trichterförmigen Wasserauffangeinrichtung in den Außenbehälter ermöglichen. Die Wasserdurchtrittsöffnungen können gleichmäßig voneinander beabstandet ausgebildet sein. Sie können im gleichen Abstand von der Längsachse der trichterförmigen Wasserauffangeinrichtung ausgebildet sein. Die trichterförmige Wasserauffangeinrichtung ist, bezogen auf die Längsachse des erfindungsgemäßen Pflanzenbehälters, vorzugsweise so von der Innenkammer und der Außenkammer beabstandet angeordnet, dass sie sich in der Krone der Pflanzen befindet. Die trichterförmige Wasserauffangeinrichtung bildet einen Wasserauffangring, der bei Regen Regenwasser auffangen und in die Innenkammer leiten kann.

Alternativ kann der erfindungsgemäße Pflanzenbehälter einen in radialer Richtung überstehenden Überstand aufweisen, der als Wasserauffangeinrichtung dient. Der Überstand dient zum Auffangen von Wasser. Der Überstand steht dabei über die Außenwand der Außenseite des erfindungsgemäßen Pflanzenbehälters hinaus. Mittels dieses Überstandes kann sichergestellt werden, dass die größtmögliche Menge an Regenwasser aufgefangen wird. Der Überstand kann in Richtung der Innenkammer geneigt sein. Bei dem Überstand kann es sich um einen an die Innenwand oder an die Außenwand angrenzenden Steg handeln. Grenzt der Überstand an die Innenwand, so können in dem Überstand eine oder mehrere Öffnungen ausgebildet sein, die sich zu der Außenkammer erstrecken. Jede dieser Öffnungen ermöglicht es, dass der Spross der Pflanze aus der Außenkammer austreten kann. Der Steg kann ein umlaufender Steg sein. Es können mehrere Stege vorgesehen sein.

Der Überstand kann aus einer Folie gebildet sein. Die Folie kann perforiert sein. Durch die Perforation der Folie kann eine Durchnässung der Pflanzen und, falls vorgesehen, der Pflanzsäcke, die sich in der Außenkammer befinden, im Falle von Regen erreicht werden.

Es kann somit vorgesehen sein, dass die Außenkammer an ihrer Oberseite offen ist oder dass die Außenkammer an ihrer Oberseite verschlossen ist. In letzterem Fall können an der Oberseite der Außenkammer eine oder mehrere Öffnungen vorgesehen sein, durch die Sprosse der Pflanze aus der Außenkammer austreten können. In einer Ausführungsform ist die Oberseite der Außenkammer durch den überstehenden Überstand verschlossen. Ist die Oberseite - abgesehen von der oder den Öffnungen, durch die Sprosse der Pflanze austreten können - verschlossen, so kann auch ein Austrocknen der Pflanzen vermindert werden. Wenn die Außenkammer an ihrer Oberseite - abgesehen von den genannten Öffnungen - verschlossen ist, kann das in der Außenkammer befindliche Wasser über Kondensation immer wieder der Pflanze zurückgeführt werden. Untersuchungen, die die Erfinder mit einem erfindungsgemäßen Pflanzenbehälter, dessen Außenkammer an der Oberseite - abgesehen von den genannten Öffnungen - verschlossen war, durchgeführt haben, ergaben, dass es bei einer Testpflanze im Verlauf eines Jahres nur einmal notwendig war, nachzugießen, und zwar geringfügig mit ca. 10 Liter Wasser. Es war hingegen notwendig zu düngen, weil die Mineralien verbraucht werden.

Es kann vorgesehen sein, dass der erfindungsgemäße Pflanzenbehälter einen Überlaufschutz aufweist. Dabei kann es sich um ein Rohr handeln, das sich von der Außenkammer zu einer Austrittsöffnung im Boden des Pflanzenbehälters erstreckt. Das Rohr ragt vom Boden der Außenkammer in die Außenkammer hinein. Die Eintrittsöffnung des Rohres befindet sich somit in der Außenkammer und ist vom Boden der Außenkammer beabstandet. Die Austrittsöffnung ist dabei vorzugsweise im Boden des Pflanzenbehälters ausgebildet. Wasser, das sich in der Außenkammer befindet, kann, wenn der Wasserstand in der Außenkammer die Eintrittsöffnung erreicht, in die Eintrittsöffnung des Rohres eintreten und über das Rohr zu der Austrittsöffnung gelangen, durch die es aus dem erfindungsgemäßen Pflanzenbehälter austritt. Damit kann eine Überfüllung der Innenkammer, die beispielsweise bei einer Übertankung oder zu viel Regen eintreten kann, verhindert werden. Staunässe kann damit ausgeschlossen werden.

Der erfindungsgemäße Pflanzenbehälter kann so ausgebildet sein, dass er demontierbar und/oder zerlegbar ist. Beispielsweise kann er aus zwei oder mehr Einzelteilen zusammensetzbar sein.

Der erfindungsgemäße Pflanzenbehälter kann modular ausgebildet sein. Der modulare Aufbau ermöglicht es beispielsweise, mehrere Pflanzenbehälter zu verbinden. Auf diese Weise können Verbände erhalten werden, die zwei oder mehr Pflanzenbehälter aufweisen. Dabei stellt der erfindungsgemäße Pflanzenbehälter ein Modul dar. Der erfindungsgemäße Pflanzenbehälter kann mit einem oder mehreren anderen Modulen verbunden sein. Beispiele eines solchen anderen Moduls sind ein Fahrradständer, eine Ladestation, eine Sitz- und/oder Ruhegelegenheit, eine Sport- und/oder Spielmöglichkeit und eine Barriere, die beispielsweise der Terroristenabwehr dienen kann. Der erfindungsgemäße Pflanzenbehälter kann in anderen Beispielen als Parkbuchttrenner für Parkplätze, als mobile Straßeneinbuchtung oder in Verbindung mit einem Ladestromversorger genutzt werden.

Der erfindungsgemäße Pflanzenbehälter kann so gestaltet sein, dass er wind- und sturmsicher ist. Zu diesem Zweck kann beispielsweise vorgesehen sein, dass die Außenwand konkav gewölbt ist. Wind hat daher nur eine vergleichsweise geringe Angriffsfläche. Außerdem kann der Fuß so dimensioniert sein, dass der Pflanzenbehälter kippsicher ist.

Der erfindungsgemäße Pflanzenbehälter kann so gestaltet sein, dass er schneesicher ist. Beispielsweise kann er so ausgebildet sein, dass er 70 kg/m² Schnee ohne Beeinträchtigung standhalten kann.

Der erfindungsgemäße Pflanzenbehälter kann beliebige Pflanzen aufnehmen. Er kann beispielsweise Blühpflanzen, Sträucher und Bäume aufnehmen. Er ist insbesondere für Rankpflanzen und Blumen, wie beispielsweise Rosen, geeignet. Er ist auch für Hydrokultur-Pflanzen geeignet. Handelt es sich bei einer Pflanze um einen Baum, so sollte dessen Größe in Höhe und Umfang festgelegt sein, bevor er in die Außenkammer des erfindungsgemäßen Pflanzenbehälters eingebracht wird.

Der erfindungsgemäße Pflanzenbehälter verhindert ein unkontrolliertes Wachstum in Größe und Form des Baumes. Die Unfallgefahr durch herabstürzende Äste ist damit beseitigt. Er verhindert ferner eine Überalterung der Pflanzen und damit unnütze Fällungen. Aufgrund der leichten Transportierbarkeit kann der Abstand des erfindungsgemäßen Pflanzenbehälters von Gebäuden leicht und, falls erwünscht, permanent angepasst werden. Damit kann ein Gebäudekontakt zwischen einer Pflanze, die sich in der Außenkammer des erfindungsgemäßen Pflanzenbehälters befindet, verhindert werden. Außerdem wird ein Zuwachsen von Straßenfronten und/oder Fenstern verhindert.

Der erfindungsgemäße Pflanzenbehälter stellt sicher, dass die in ihn eingebrachten Pflanzen keine Wachstumsprobleme haben. Es können bereits große Pflanzen in die Außenkammer eingesetzt werden. Damit sind keine Wartezeiten für einen Neubewuchs des erfindungsgemäßen Pflanzenbehälters erforderlich.

Die Größe des erfindungsgemäßen Pflanzenbehälters kann an die Wünsche von Nutzern und/oder nach den örtlichen Gegebenheiten angepasst werden. Seine Form und/oder Größe sind frei wählbar. Der erfindungsgemäße Pflanzenbehälter kann aus jedem an sich geeigneten Material hergestellt werden. Beispielsweise kann er aus Beton, Granit, Stahl, beispielsweise Edelstahl, hergestellt sein. Er kann aus recyceltem Material hergestellt sein. Der erfindungsgemäße Pflanzenbehälter ist unabhängig von der Temperatur einsetzbar. Er ist frostsicher. Dazu kann vorgesehen sein, dass die Innenkammer leicht größer konisch nach oben gebaut ist. In diesem Fall kann sich das Wasser im Frostfall ausdehnen, ohne dass der Innenbehälter durch das sich ausdehnende Wasser beschädigt, beispielsweise "gesprengt" wird. Eine Innenkammer mit kegelstumpfförmiger Grundform kann daher bevorzugt sein. Eine solche Innenkammer kann konisch ausgebildet sein.

Der erfindungsgemäße Pflanzenbehälter kann zur Erhöhung der Biodiversität durch Vogelbrutkästen und/oder Insektenbrutkästen genutzt werden. Beispielsweise kann der erfindungsgemäße Pflanzenbehälter einen Vogelbrutkasten und/oder einen Insektenbrutkasten aufweisen. Der Vogelbrutkasten und/oder der Insektenbrutkasten können beispielsweise an der Außenwand des erfindungsgemäßen Pflanzenbehälters befestigt sein. Alternativ oder zusätzlich kann ein Vogelbrutkasten und/oder ein Insektenbrutkasten an einer Pflanze, die in die Außenkammer des erfindungsgemäßen Pflanzenbehälters eingesetzt ist, beispielsweise an einem Baum, befestigt sein.

Die erfindungsgemäß vorgesehene Innenkammer, die als Wassertank dient, stellt eine autonome Bewässerung der Pflanze(n) sicher. Diese Bewässerung kann optional fernüberwacht werden.

Der erfindungsgemäße Pflanzenbehälter ist beleuchtbar. Beispielsweise können an ihm eine oder mehrere Leuchtelemente befestigt sein. Er kann als Werbeträger dienen, wobei die Werbung beispielsweise mittels dem oder den Leuchtelementen beleuchtbar ist.

Der erfindungsgemäße Pflanzenbehälter ist aufgrund seiner flexiblen Bauart an das Wetter angepasst. Beispielsweise ist das Rankgitter, wenn es aus Federstahl besteht, windangepasst. In seiner Funktion ähnelt es dem Geäst eines Baumes.

Der erfindungsgemäße Pflanzenbehälter kann eine starre oder eine flexible Rankeinheit aufweisen. Alternativ kann sie eine Rankeinheit aufweisen, die aus starren und flexiblen Elementen besteht. Bei der Rankeinheit kann es sich um die Haltestreben für die Wasserauffangeinrichtung oder um das Rankgitter handeln. Die Auslegung der Rankeinheit hängt von der Größe der Pflanze, bezogen auf deren ausgewachsenen Zustand, ab. Basis für die Bestimmung der Größe der Rankeinheit ist die Windlaststatik. Bisherige Windlastberechnungen zeigen, dass eine Berücksichtigung der Windlast erst ab Grünmengen von ca. 10 cm³ erforderlich ist.

Es kann vorgesehen sein, dass zumindest eine der Pflanzen in einem Pflanzsack bereitgestellt wird. Der Pflanzsack kann dann in die Außenkammer eingebracht werden. Bei einem Pflanzsack handelt es sich um einen Sack aus einem wasserdurchlässigen und/oder luftdurchlässigen Material, in dem sich ein Substrat befindet, in dem die Pflanze wurzeln kann. Bei dem Material kann es sich beispielsweise um einen Kunststoff, Papier oder ein Gewebe aus Naturfasern handeln. Bei dem Substrat kann es sich beispielsweise um ein Granulat und/oder Erde handeln. Der Spross der Pflanze erstreckt sich aus einer Öffnung des Pflanzsacks aus diesem heraus. Der Pflanzsack ermöglicht es, die Pflanzen separat vorzuziehen, bevor sie in die Außenkammer eingesetzt werden. Außerdem ermöglicht der Pflanzsack die Entnahme der Pflanze aus der Außenkammer, wenn diese einen Schaden erlitten hat. Damit wird ein Austausch der Pflanzen erleichtert.

Nach Maßgabe der Erfindung ist ferner ein Verfahren zur Haltung von Pflanzen unter Verwendung eines erfindungsgemäßen Pflanzenbehälters vorgesehen. Das Verfahren sieht vor, dass in die Bodenkammer ein Substrat gefüllt wird, in die Außenkammer eine oder mehrere Pflanzen eingesetzt werden und in die Innenkammer Wasser eingebracht wird. Die Pflanzen, die sich in der Außenkammer befinden, werden mit Wasser, das aus der Innenkammer in die Bodenkammer gelangt, versorgt. Die Pflanzen können Wurzeln bilden, die sich in das Substrat erstrecken und von dort Wasser und Nährstoffe aufnehmen. Das Höhenwachstum der Pflanzen sorgt dafür, dass sich ihre Sprosse aus der Außenkammer nach außen, d. h. in die Umgebung des erfindungsgemäßen Pflanzenbehälters erstrecken.

Weitere Einzelheiten des erfindungsgemäßen Verfahrens sind bereits im Zusammenhang mit dem erfindungsgemäßen Pflanzenbehälter beschrieben worden. Auf diese Beschreibung wird verwiesen.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine Seitenansicht einer Ausführungsform des erfindungsgemäßen Pflanzenbehälters;
- Fig. 2: eine schematische Schnittdarstellung der Ausführungsform entlang Schnittlinie A--A von Fig. 1;
- Fig. 3: eine schematische Schnittdarstellung der Ausführungsform entlang der Schnittlinie B--B von Fig. 2;
- Fig. 4: eine Detaildarstellung des Fußes der Ausführungsform des erfindungsgemäßen Pflanzenbehälters;
- Fig. 5: eine Draufsicht auf die Ausführungsform des erfindungsgemäßen Pflanzenbehälters;
- Fig. 6: die in Fig. 5 gezeigte Draufsicht mit Pflanzen; und
- Fig. 7: einen Teil von Fig. 2, wobei zusätzlich Pflanze, Pflanzsack, Substrat und Wasser dargestellt sind.

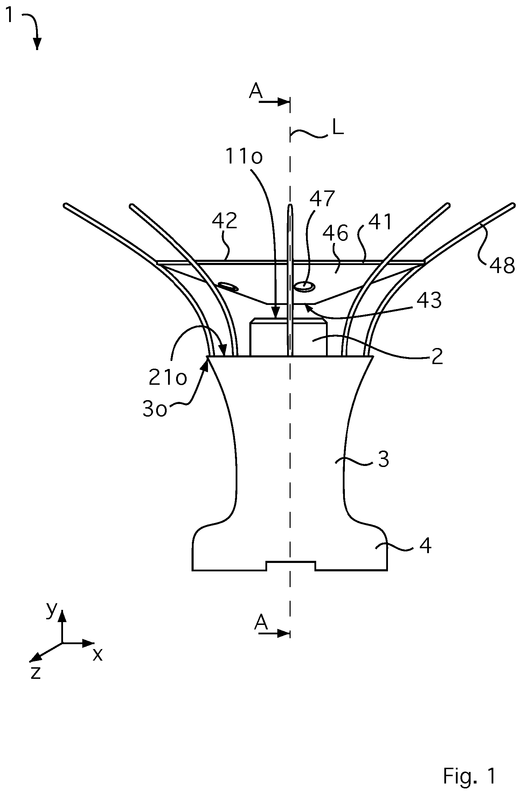

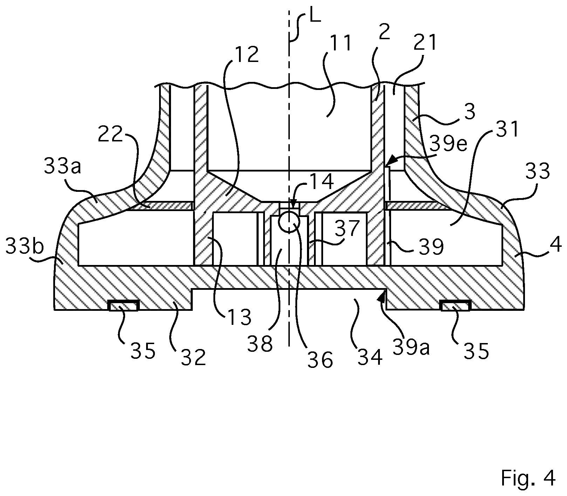

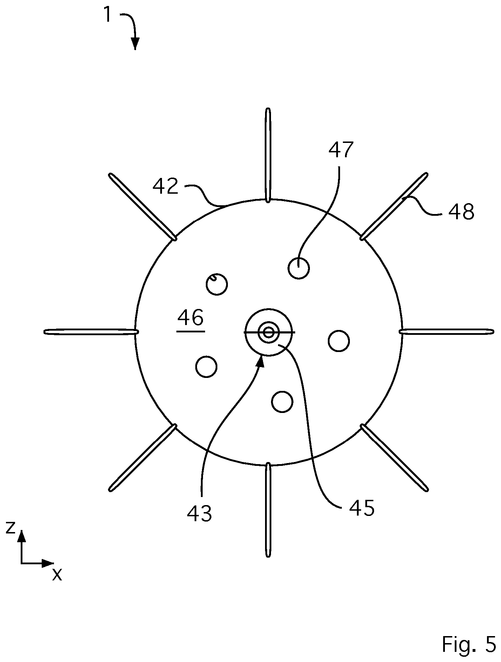

Die in den Figuren 1 bis 7 gezeigte Ausführungsform eines erfindungsgemäßen Pflanzenbehälters 1 weist eine Innenkammer 11 und eine Außenkammer 21 auf. Die Innenkammer 11, die an ihrer Oberseite 11o offen ist, dient zur Aufnahme von Wasser 81. Die Außenkammer 21 dient zur Aufnahme einer Pflanze 82. Eine umlaufende Innenwand 2 trennt die Innenkammer 11 von der Außenkammer 21. Eine umlaufende Außenwand 3 begrenzt die Außenkammer 21. Der Pflanzenbehälter 1 weist einen Fuß 4 auf, in dem eine Bodenkammer 31 ausgebildet ist. Die Bodenkammer 31 ist zur Aufnahme eines Substrates 83 bestimmt.

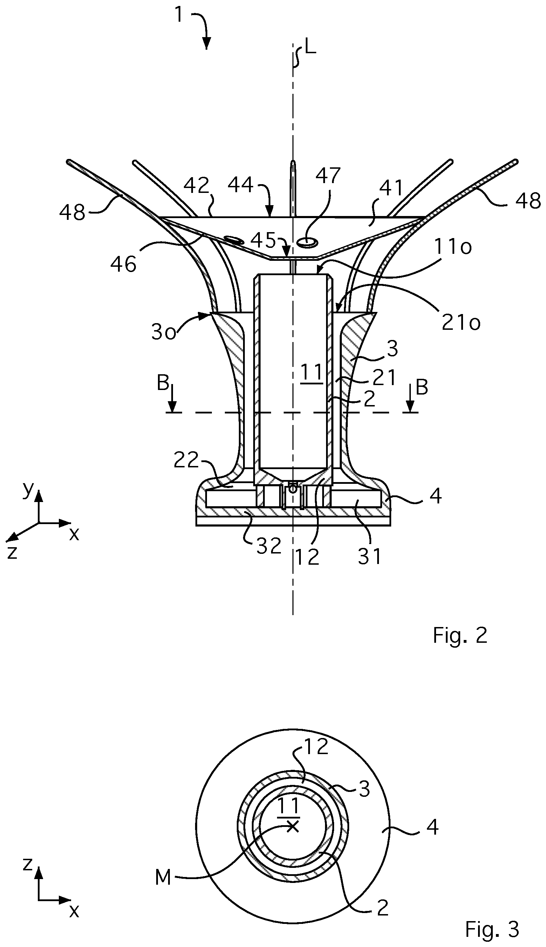

Die Außenkammer 21 erstreckt sich um die Innenkammer 11 (siehe auch Fig. 2). Die Innenkammer 11 weist einen kreisförmigen Querschnitt auf, während die Außenkammer 21 einen ringförmigen Querschnitt besitzt. Die Innenwand 2 und die Außenwand 3 weisen jeweils einen ringförmigen Querschnitt auf. Der Mittelpunkt des ringförmigen Querschnitts der Außenkammer liegt auf dem kreisförmigen Mittelpunkt des Querschnitts der Innenkammer. In Fig. 2 sind die beiden Mittelpunkte durch den Punkt M gekennzeichnet. Durch diesen Punkt M erstreckt sich die Längsachse L des Pflanzenbehälters 1 (siehe Fig. 1). Die Innenwand 2 steht in Richtung der Längsachse L über die Außenwand 3 über. Die Innenkammer 11 überragt deshalb die Außenkammer 21.

Die Außenkammer 21 weist an ihrer Unterseite ein Trenngitter 22 auf, dass die Außenkammer 21 von der Bodenkammer 31 trennt. Über Öffnungen des Trenngitters 22 steht die Bodenkammer 31 in Verbindung mit der Außenkammer 21. Durch diese Öffnungen können Pflanzenwurzeln der in der Außenkammer 21 befindlichen Pflanzen 82 in die Bodenkammer 31 eintreten. Die Bodenkammer 31 steht mit der Außenkammer 21 über die Öffnungen im Trenngitter 22 und mit der Innenkammer 11 über die Öffnung 14 in Verbindung.

Der Fuß 4 des Pflanzenbehälters 1 weist einen Boden 32 auf, der gleichzeitig den Boden des Pflanzenbehälters 1 bildet. Der Boden 32 ist über eine umlaufende Seitenwand 33 mit der Außenwand 3 verbunden. Der Fuß 4 des Pflanzenbehälters 1 steht in radialer Richtung über die Außenwand 3 über. Dazu weist die umlaufende Seitenwand 33 einen ersten umlaufenden Abschnitt 33a auf, der an die Außenwand 3 angrenzt und dort in im Wesentlichen radialer Richtung nach außen, d. h. von der Längsachse weg, übersteht. An diesen ersten umlaufenden Abschnitt 33a grenzt ein zweiter umlaufender Abschnitt 33b an, der sich im Wesentlichen parallel zur Längsachse L des Pflanzenbehälters 1 erstreckt. Die Bodenkammer 31 wird von dem Boden 32 des Pflanzenbehälters 1, der umlaufenden Seitenwand 33, dem Trenngitter 22 und dem Boden 12 der Innenkammer 11 begrenzt. Die Ausdehnung der Bodenkammer 31 in radialer Richtung von der Längsachse L des Pflanzenbehälters 1 ist größer als die Ausdehnung der Außenkammer 21 in dieser Richtung.

Im Boden 32 ist eine Ausnehmung 34 für ein Transportgerät ausgebildet. Die Ausnehmung 34 erstreckt sich vom Rand des Bodens 32 in radialer Richtung über die gesamte Ausdehnung des Bodens 32. Am Boden 32 sind verstellbare Füße 35 ausgebildet, die eine Höhenverstellung und damit eine Ausrichtung des Pflanzenbehälters 1 ermöglichen.

Die Innenkammer 11 weist den Boden 12 auf. Der Boden 12 grenzt an die Innenwand 2 an. Die Innenkammer 11 ist somit von der Innenwand 2 und ihrem Boden 12 begrenzt. Der Boden 12 bildet dabei eine Stirnseite der Innenkammer. An der gegenüberliegenden Stirnseite, die die Oberseite 11o der Innenkammer 11 bildet, ist die Innenkammer 11 offen. Der Boden 12 der Innenkammer 11 ist vom Boden 32 des Pflanzenbehälters 1 beabstandet. Am Boden 12 der Innenkammer 11 sind Stelzen 13 ausgebildet, die sich durch die Bodenkammer 31 bis zum Boden 32 des Pflanzenbehälters 1 erstrecken. Die Stelzen 13 stützen den Boden 12 der Innenkammer 11 am Boden 32 des Pflanzenbehälters 1 ab. Die Stelzen 13 sind voneinander beabstandet, so dass die Bodenkammer 31 nicht verschlossen wird.

Im Boden 12 der Innenkammer 11 ist eine Öffnung 14 ausgebildet. Über diese Öffnung 14 steht die Bodenkammer 31 in Verbindung mit der Innenkammer 11. Wasser, das sich in der Innenkammer 11 befindet, kann durch die Öffnung 14 in die Bodenkammer 31 eintreten. Zur Regulierung des Wasserstandes in der Innenkammer ist ein kugelförmiger Körper 36 vorgesehen, der als Ventil dient. Zur Führung des kugelförmigen Körpers 36 in vertikaler Richtung sind vertikal verlaufende, strebenförmige Führungselemente 37 vorgesehen. Die Führungselemente 37 begrenzen einen Kanal 38, in dem der kugelförmige Körper 36 steigen und sinken kann. Die Führungselemente 37 sind voneinander beanstandet, so dass Wasser in den Kanal eintreten oder aus diesem austreten kann. Sie verschließen die Bodenkammer 31 nicht. Die Führungselemente erstrecken sich dabei vom Boden 12 der Innenkammer 11 zum Boden 32 des Pflanzenbehälters 1. Die vertikale Achse des Kanals 38 liegt auf der Längsachse L des Pflanzenbehälters.

Die Innenkammer 11 und die Außenkammer 21 weisen eine gemeinsame Längsachse L auf. Sie sind koaxial, bezogen auf die Längsachse L des Pflanzenbehälters 1, angeordnet. Die Innenkammer 11 weist eine zylinderförmige oder kegelstumpfförmige Grundform auf. Die Längsachse der zylinderförmigen Grundform liegt auf der Längsachse L des erfindungsgemäßen Pflanzenbehälters. Dabei bildet die Innenwand 2 den Mantel des Grundkörpers und der Boden 12 der Innenkammer 11 eine ihrer Stirnseiten. An der anderen Stirnseite, das ist die Oberseite 11o, ist die Innenkammer 11 unter Ausbildung einer Öffnung offen.

Die Außenkammer 21 weist eine hohlzylinderförmige Grundform auf. Die Längsachse der hohlzylinderförmigen Grundform liegt auf der Längsachse L des Pflanzenbehälters 1. Dabei bildet die Innenwand 2 die innere Mantelfläche des Grundkörpers, die Außenwand 3 die äußere Mantelfläche des Grundkörper und der Boden 32 der Außenkammer 21 eine ihrer Stirnseiten. An der anderen Stirnseite ist die Außenkammer 21 unter Ausbildung einer ringförmigen Öffnung 21o offen.

Oberhalb der Innenkammer 11 und der Außenkammer 21 ist eine trichterförmige Wasserauffangeinrichtung 41 angeordnet. Die trichterförmige Wasserauffangeinrichtung 41 verjüngt sich von einer Oberkante 42 zu einer Unterkante 43. Die Oberkante 42 begrenzt eine obere Öffnung 44, die Unterkante 43 eine untere Öffnung 45, die einen geringeren Durchmesser als die obere Öffnung 44 aufweist. Die Oberkante 42 ist durch eine umlaufende Wandung 46 mit der Unterkante 43 verbunden. Die untere Öffnung 45 liegt der Oberseite 11o der Innenkammer gegenüber. Über die Wandung 46 wird Regenwasser zur Innenkammer 11 geführt. Die Wasserauffangeinrichtung 41 verschließt jedoch weder die Innenkammer 11 noch die Außenkammer 21. Der Durchmesser der unteren Öffnungen 45 ist geringer als der Durchmesser der Innenkammer an ihrer Stirnseite, die der unteren Öffnung 45 zugewandt ist. Die an der ringförmigen Öffnung 21o aus der Außenkammer 21 austretenden Pflanzen 82 werden somit durch die Wasserauffangeinrichtung 41 nicht behindert. In der Wandung 46 sind Wasserdurchtrittsöffnungen 47 ausgebildet, die gleichmäßig voneinander beabstandet sind und denselben Abstand von der Längsachse L aufweisen.

Die Wasserauffangeinrichtung 41 ist mittels Haltestreben 48 an der Oberkante 3o der Außenwand 3 befestigt. Dabei sind die Haltestreben 48, ausgehend von der Oberkante der Außenwand 3, nach außen gekrümmt, d. h. ihr Abstand von der Längsachse L nimmt mit der Entfernung von der Oberkante 3o der Außenwand 3 zu.

Der Pflanzenbehälter 1 weist einen Überlaufschutz 39 auf. Dabei handelt es sich um ein Rohr, das sich von der Außenkammer 21 zu einer Austrittsöffnung 39a im Boden 32 des Pflanzenbehälters 1 erstreckt. Das Rohr ragt durch das Trenngitter 22, das den Boden der Außenkammer 21 bildet, in die Außenkammer 21 hinein. Die Eintrittsöffnung 39e des Rohres befindet sich somit in der Außenkammer 21 und ist vom Boden der Außenkammer 21 beabstandet. Die Austrittsöffnung 39a ist im Boden 32 der Bodenkammer 31 ausgebildet. Wasser, das sich in der Außenkammer 21 befindet, kann, wenn der Wasserstand in der Außenkammer 21 die Eintrittsöffnung 39e erreicht, in die Eintrittsöffnung 39e des Rohres eintreten und über das Rohr zu der Austrittsöffnung 39a gelangen, durch die es aus dem Pflanzenbehälter 1 austritt.

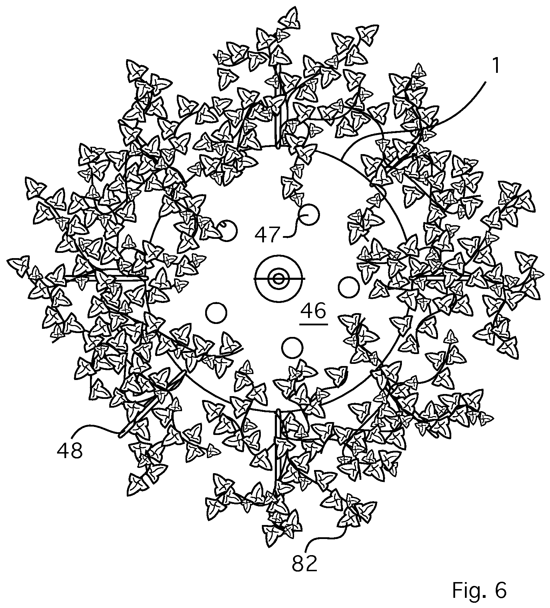

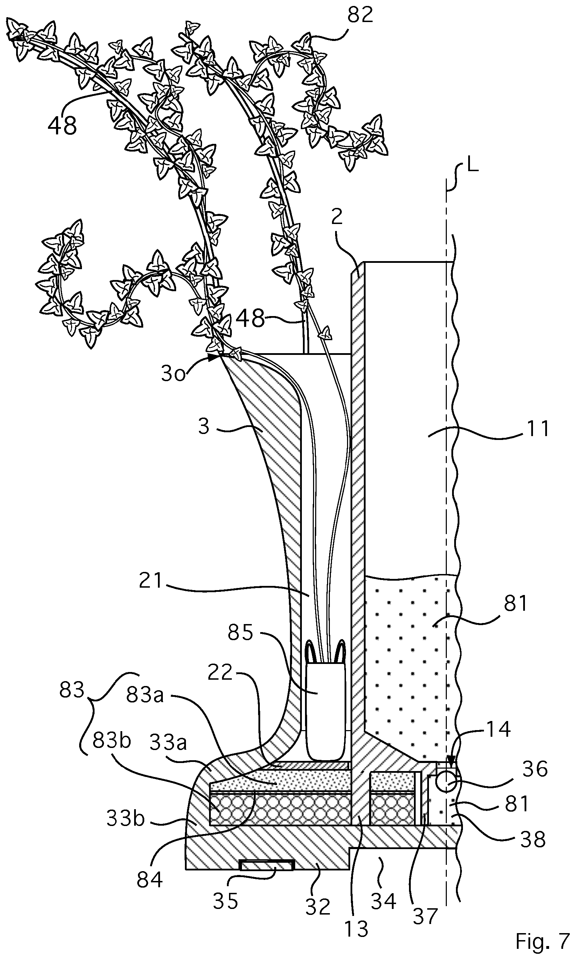

Die Figuren 6 und 7 veranschaulichen die Verwendung des Pflanzenbehälters 1. In die Außenkammer 21 ist eine Pflanze 82, die sich in einem Pflanzsack 85 befindet, eingebracht. Dabei steht der Pflanzsack 85 auf dem Trenngitter 22 auf. In der Bodenkammer 31 befindet sich das Substrat 83, das aus einer Schicht Erde 83a und einer Schicht Granulat 83b besteht, die durch eine Trennfolie 84 voneinander getrennt sind. Dabei liegt die Schicht Granulat 83b auf dem Boden 32 auf, die Folie 84 auf der Schicht Granulat 83b und die Schicht Erde 83a auf der Trennfolie 84. In der Innenkammer 11 und im Kanal 38 befindet sich Wasser 81. Die Pflanze 82 erstreckt sich mit ihren Sprossen durch die ringförmige Öffnung 21o und rankt um die Haltestreben 48, wobei sie unterhalb der Wasserauffangeinrichtung 41 in radialer Richtung hervorragt.

### Bezugszeichenliste

- 1: Pflanzenbehälter
- 2: Innenwand
- 3: Außenwand
- 3o: Oberkante
- 4: Fuß

- 11: Innenkammer
- 11o: Oberseite
- 12: Boden
- 13: Stelze
- 14: Öffnung

- 21: Außenkammer
- 21o: ringförmige Öffnung
- 22: Trenngitter

- 31: Bodenkammer
- 32: Boden
- 33: Seitenwand
- 33a: erster umlaufender Abschnitt
- 33b: zweiter umlaufender Abschnitt
- 34: Ausnehmung
- 35: Fuß
- 36: kugelförmiger Körper
- 37: Führungselement
- 38: Kanal
- 39: Überlaufschutz
- 39e: Eintrittsöffnung
- 39a: Austrittsöffnung

- 41: Wasserauffangeinrichtung
- 42: Oberkante
- 43: Unterkante
- 44: obere Öffnung
- 45: untere Öffnung
- 46: Wandung
- 47: Wasserdurchtrittsöffnungen
- 48: Haltestrebe

- 81: Wasser
- 82: Pflanze
- 83: Substrat
- 83a: Erde
- 83b: Granulat
- 84: Trennfolie
- 85: Pflanzsack

## Patentansprüche

1. Pflanzenbehälter (1), aufweisend eine an ihrer Oberseite (11o) offene Innenkammer (11) zur Aufnahme von Wasser (81), eine Außenkammer (21) zur Aufnahme zumindest einer Pflanze (82), eine umlaufende Innenwand (2), die die Innenkammer (11) von der Außenkammer (21) trennt, und eine umlaufende Außenwand (3), die die Außenkammer (21) begrenzt, wobei der Pflanzenbehälter (1) einen Fuß (4) aufweist, in dem eine Bodenkammer (31) zur Aufnahme eines Substrates (83) ausgebildet ist, wobei die Bodenkammer (31) mit der Innenkammer (11) und der Außenkammer (21) in Verbindung steht.

2. Pflanzenbehälter nach Anspruch 1, **dadurch gekennzeichnet, dass** die Außenkammer (21) durch ein Trenngitter (22) von der Bodenkammer (31) getrennt ist.

3. Pflanzenbehälter nach Anspruch 1 oder Anspruch 2, **dadurch gekennzeichnet, dass** die Außenkammer (21) einen Boden aufweist, in dem eine Öffnung zur Bodenkammer (31) ausgebildet ist.

4. Pflanzenbehälter nach einem der vorstehenden Ansprüche, **dadurch gekennzeichnet, dass** der Fuß (4) einen Boden (32) aufweist, der über eine umlaufende Seitenwand (33) mit der Außenwand (3) verbunden ist und der die Bodenkammer (31) begrenzt.

5. Pflanzenbehälter nach Anspruch 4, **dadurch gekennzeichnet, dass** der Boden (32) eine Ausnehmung (34) für ein Transportgerät aufweist.

6. Pflanzenbehälter nach Anspruch 4 oder Anspruch 5, **dadurch gekennzeichnet, dass** am Boden (32) zumindest ein verstellbarer Fuß (35) ausgebildet ist.

7. Pflanzenbehälter nach einem der vorstehenden Ansprüche, **dadurch gekennzeichnet, dass** die Innenkammer (11) einen Boden (12) aufweist, der an die Innenwand (2) angrenzt, wobei der Boden (12) der Innenkammer (11) von dem Boden (32) des Pflanzenbehälters (1) beabstandet ist.

8. Pflanzenbehälter nach Anspruch 7, **dadurch gekennzeichnet, dass** am Boden (12) der Innenkammer (11) eine oder mehrere Stelzen (13) ausgebildet sind, die sich bis zum Boden (32) des Pflanzenbehälters (1) erstrecken.

9. Pflanzenbehälter nach einem der vorstehenden Ansprüche, **dadurch gekennzeichnet, dass** die Innenkammer (11) einen kreisförmigen Querschnitt aufweist.

10. Pflanzenbehälter nach einem der vorstehenden Ansprüche, **dadurch gekennzeichnet, dass** die Außenkammer (21) einen ringförmigen Querschnitt aufweist.

11. Pflanzenbehälter nach einem der vorstehenden Ansprüche, **dadurch gekennzeichnet, dass** die Innenkammer (11) und die Außenkammer (21) eine gemeinsame Längsachse (L) aufweisen.

12. Pflanzenbehälter nach einem der vorstehenden Ansprüche, **dadurch gekennzeichnet, dass** er im Wesentlichen rotationssymmetrisch ausgebildet ist.

13. Pflanzenbehälter nach einem der vorstehenden Ansprüche, **dadurch gekennzeichnet, dass** er eine Wasserauffangeinrichtung (41) aufweist.

14. Pflanzenbehälter nach Anspruch 13, **dadurch gekennzeichnet, dass** die Wasserauffangeinrichtung (41) mittels Haltestreben (48) an der Außenwand (3) befestigt ist.

15. Verfahren zur Haltung von Pflanzen unter Verwendung eines Pflanzenbehälters (1) gemäß einem der Ansprüche 1 bis 14, **dadurch gekennzeichnet, dass** in die Bodenkammer (31) ein Substrat (83) gefüllt wird, in die Außenkammer (21) eine oder mehrere Pflanzen (82) eingesetzt werden und in die Innenkammer (11) Wasser (81) eingebracht wird.
